# EUROPÄISCHE PATENTANMELDUNG

(11) **EP 4 703 074 A1**
(43) Veröffentlichungstag der Anmeldung: **04.03.2026**
(21) Anmeldenummer: 24198199.2
(22) Anmeldetag: 03.09.2024
(51) Int. Cl.: B23D 57/00, B23D 59/00

(54) **SEILSÄGE UND VERFAHREN ZUM BETRIEB EINER SEILSÄGE**

(71) Anmelder: Hilti Aktiengesellschaft, 9494 Schaan (LI)
(72) Erfinder: Rieger, Hans-Joerg, 6712 Thueringen (AT); Plattner, David, 6200 Gallzein (AT)
(74) Vertreter: Hilti Aktiengesellschaft Corporate Intellectual Property

(57) **Zusammenfassung**

Die vorliegende Erfindung betrifft eine Seilsäge (1) welche folgendes aufweist: einen Seilantrieb (2) zum Antrieb eines Sägeseils (4); einen Seilspeicher (3) mit mindestens zwei Speicherebenen; einen Spannmechanismus (6) zum Spannen eines Sägeseils (4); eine Steuervorrichtung (110), welche ausgebildet ist zum: Empfangen von Belegungs-Daten, welche repräsentativ für eine Anzahl an mit einem Sägeseil (4) belegten Speicherebenen des Seilspeichers (3) ist; Bestimmen einer Soll-Spannung auf Grundlage der Belegungs-Daten; und Steuern des Spannmechanismus (6) zur Einstellung der Soll-Spannung.

## Beschreibung

Die vorliegende Erfindung betrifft eine Seilsäge mit einem Seilantrieb und einem Seilspeicher. In einem zweiten Aspekt betrifft die Erfindung ein Verfahren zum Betrieb einer Seilsäge.

### Hintergrund der Erfindung:

Im Stand der Technik sind sogenannte Seilsägen bekannt, mit denen große Schnitte, beispielsweise in Wände, eingebracht werden können. Seilsägen verfügen üblicherweise über ein als Endlos-Sägeseil ausgebildetes Sägeseil, das im Inneren der Seilsäge über verschiedene Rollen geführt und gespannt wird. Zumindest ein Teil dieser Rollen bilden einen Seilspeicher, in dem das Sägeseil gespeichert werden kann. Solch ein Seilspeicher besteht aus zwei oder mehr Rollen oder Sätzen von Rollen, zwischen denen das Seil hin und her läuft. Jeder Rollensatz weist eine Vielzahl paralleler Rollen auf. Werden die Rollensätze voneinander entfernt, nimmt der Seilspeicher mehr Seil auf. Auch wird mit steigender Belegung der parallelen Rollen der Rollensätze mehr Seil aufgenommen. Man spricht hier auch von belegten Ebenen der Rollensätze. Damit kann im Betrieb der Seilsäge das freiwerdende Seil durch den Seilspeicher aufgenommen werden, indem die Rollensätze dem Schnittfortschritt entsprechend voneinander entfernt werden. Sobald die Rollensätze einen durch die Dimension der Seilsäge limitierten, maximalen Abstand voneinander aufweisen, muss eine neue Ebene des Seilspeichers (d.h. weitere Rollen der Rollensätze) mit dem Seil belegt werden. Die Belegung neuer Ebenen des Seilspeichers ist typischerweise ein manueller Vorgang. Sollten alle Ebenen (d.h. Rollen) des Seilspeichers belegt und die Rollensätze maximal beabstandet sein, so ist die maximale Aufnahmekapazität des Seilspeichers erreicht.

Die Rollensätze des Seilspeichers mit dem zwischen diesen hin- und her laufenden Sägeseil entsprechen einem Flaschenzug: um die betriebsnotwendige Seilspannung zu halten, müssen die Rollensätze mit hoher Kraft voneinander getrennt gehalten werden. Je grösser das Aufnahmevermögen des Seilspeichers sein soll, desto mehr (parallele) Rollen müssen pro Rollensatz eingesetzt werden. Es ergibt sich eine den belegten Ebenen entsprechende Anzahl von hin- und her laufenden Seilabschnitten. Die zum Spannen der Rollensätze benötigte Kraft entspricht der Kraft der Seilspannung multipliziert mit der Anzahl der belegten Ebenen. Zum Spannen des Sägeseils ist üblicherweise ein Spann- und Spreizmechanismus vorgesehen, mit dem das Sägeseil straff gehalten wird. Der Spannmechanismus kann beispielsweise einen Linearaktuator aufweisen, welcher dazu dient die Rollensätze relativ zueinander zu bewegen, d.h. je nach Anwendungsfall voneinander weg oder aufeinander zu.

Bei Seilsägen mit Seilspeicher muss, je nach Belegung des Seilspeichers, der Seilzug zumindest für das Starten des Sägevorgangs eingestellt werden. Dieser Wert für den Seilzug muss vom Anwender manuell eingestellt werden. Dabei müssen mehrere Faktoren, wie beispielsweise die Anzahl der Speicherebenen, die Eigenschaften des Sägeseils, sowie die Art der Rollen der Seilsäge berücksichtigt werden.

Ein Nachteil der bekannten Lösungen ist es deshalb, dass die Einstellung des Seilzugs einerseits aufwendig und, andererseits, fehleranfällig ist. Im schlimmsten Fall kann es, bei einem zu hoch eingestellten Seilzug, gar zum Reißen des Sägeseils kommen. Schließlich ist es für den Anwender nicht erkennbar, wie viel freier Seilspeicher noch zur Verfügung steht, um abschätzen zu können, wann ein Erweitern des Speichers oder eine Neupositionierung der Antriebs- und Speichereinheit notwendig wird.

Auf Grundlage der oben genannten Problemstellung ist es eine Aufgabe der vorliegenden Erfindung, eine Seilsäge bzw. ein Verfahren zum Betrieb einer Seilsäge anzugeben, welche die Anwendung vereinfachen und Fehler bei der Eingabe der Seilzugkraft bzw. der Speicherebene reduziert/vermeidet. Darüber hinaus soll gleichzeitig eine Überblick über die noch verfügbaren Restspeicherkapazität ermöglicht werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Dementsprechend betrifft die vorliegende Erfindung eine Seilsäge, welche folgendes aufweist:
- einen Seilantrieb zum Antrieb eines Sägeseils;
- einen Seilspeicher mit mindestens zwei Speicherebenen;
- ein Spannmechanismus zum Spannen eines Sägeseils;
- eine Steuervorrichtung, welche ausgebildet ist zum:
   - Empfangen von Belegungs-Daten, welche repräsentativ für eine Anzahl an mit einem
   Sägeseil belegten Speicherebenen des Seilspeichers ist;
- Bestimmen einer Soll-Spannung auf Grundlage der Belegungs-Daten;
- Steuern des Spannmechanismus zur Einstellung der Soll-Spannung.

Die erfindungsgemäße Seilsäge steuert den Spannmechanismus auf Grundlage der belegten Speicherebenen vollautomatisch. Folglich wird sichergestellt, dass die Seilspannung zu jedem Zeitpunkt ausreichend groß ist. Gleichzeitig wird die Seilspannung nicht zu hoch, um ein Reißen des Sägeseils zu verhindern. Schließlich ist die neue Seilsäge nutzerfreundlicher, da der Benutzer den Zusammenhang zwischen Speicherebenen und Seilspannung nicht kennen muss. Einerseits kann die Steuervorrichtung dazu ausgebildet sein, den Spannmechanismus bei Start der Seilsäge einzustellen, nachdem der Benutzer den Speicher manuell belegt hat. Andererseits kann die Seilsäge während des Sägebetriebs die Spannkraft des Spannmechanismus automatisch auf die Belegung der Speicherebenen anpassen. Die Belegungs-Daten können entweder vom Benutzer eingegeben oder durch eine entsprechende Sensorvorrichtung automatisch erkannt werden.

Nach einer Ausführungsform kann die Steuervorrichtung dazu ausgebildet sein, eine Regelgeschwindigkeit des Spannmechanismus auf Grundlage der Belegungs-Daten einzustellen. Beispielsweise kann die Steuervorrichtung den Spannmechanismus bei geringer Speicherbelegung langsamer regeln, als dies bei hoher Speicherbelegung der Fall ist. Mit anderen Worten, bei hoher Speicherbelegung (bspw. zwei oder mehr Speicherebenen sind belegt), kann die Steuervorrichtung die Seilspannung in großen Regelschritten anpassen. Dagegen kann die Steuervorrichtung bei geringer Speicherbelegung (bspw. eine Speicherebene ist belegt) die Seilspannung in kleineren Regelschritten anpassen. Die Größe der Regelschritte wird also durch die Steuervorrichtung auf Grundlage der Belegungs-Daten angepasst.

Nach einer weiteren Ausführungsform ist der Spannmechanismus, insbesondere stufenlos, zwischen einer ersten, eingefahrenen Stellung und einer zweiten, ausgefahrenen Stellung beweglich, wobei die Seilsäge eine zweite Sensorvorrichtung aufweist, welche dazu ausgebildet ist die Position des Spannmechanismus zu erfassen und als Hub-Daten an die Steuervorrichtung zu übertragen. Dies hat den Vorteil, dass die Steuervorrichtung zur Regelung der Seilspannung die aktuelle Lage des Spannmechanismus als Steuergröße beachten kann. Hierdurch wird die Steuerung der Soll-Spannung verbessert. Die zweite Sensorvorrichtung kann beispielsweise als Hall-Sensor oder optischer Sensor ausgebildet sein. Es ist generell vorstellbar jeden bekannten Sensor zu verwenden, welcher sich zur Erkennung der Position des Spannmechanismus, insbesondere zum Erkennen des Kolbenhubs, eignet.

Nach einer weiteren Ausführungsform ist die Steuervorrichtung dazu ausgebildet, die Hub-Daten zu empfangen und, auf Grundlage der Hub-Daten, einen Resthub des Spannmechanismus zu ermitteln. Der Resthub kann einem Abstand des Spannmechanismus von der zweiten, ausgefahrenen Stellung entsprechen. Die Steuervorrichtung kann den Resthub einerseits dazu verwenden, den Nutzer auf die Notwendigkeit eines Wechsels der Speicherebene hinzuweisen. Beispielsweise kann die Steuervorrichtung dazu eingerichtet sein, den Nutzer zu informieren, wenn der Resthub Null oder im Wesentlichen Null ist. Dies ist insbesondere deshalb der Fall, da die Seilaufnahmekapazität bei Erreichen der voll ausgefahrenen Stellung des Spannmechanismus nur noch durch die Verwendung einer weiteren Speicherebene erweitert werden kann.

Nach einer weiteren Ausführungsform ist die Steuervorrichtung dazu ausgebildet eine Rest-Speicherkapazität des Seilspeichers auf Grundlage der Belegungs-Daten und/oder der Hub-Daten zu ermitteln. Die Steuervorrichtung kann die Rest-Speicherkapazität an den Nutzer ausgeben. Hierdurch ist es einfacher für den Nutzer abzuschätzen, ob die Rest-Speicherkapazität ausreichen wird, um den Schnitt fertig zu stellen oder ob das Sägeseil gekürzt bzw. die Seilsäge verstellt werden muss.

Nach einer weiteren Ausführungsform nimmt die Steuervorrichtung zur Ermittlung der Rest-Speicherkapazität folgende Schritte vor:
- Bilden eines Produkts aus nicht belegten Speicherebenen und einem Gesamthub des Spannmechanismus;
- Addieren des Produkts mit dem Resthub des Spannmechanismus.

Nach einer weiteren Ausführungsform ist die Steuervorrichtung dazu ausgebildet ein Rest-Speicherkapazitäts-Signal für den Benutzer der Seilsäge auszugeben.

Nach einer weiteren Ausführungsform weist die Seilsäge mindestens eine Führungsrolle auf, welche dazu ausgebildet ist das Sägeseil in ein Gehäuse der Seilsäge hinein und/oder aus einem Gehäuse heraus zu führen, wobei die Führungsrolle derart beweglich am Gehäuse der Seilsäge angeordnet ist, dass die Führungsrolle zwischen einer ersten Position, bei Belegung einer Speicherebene des Seilspeichers und einer zweiten Position, bei Belegung aller Speicherebenen des Seilspeichers, überführbar ist, wobei die erste Sensorvorrichtung dazu ausgebildet ist, die Position der Führungsrolle zu erfassen und als Belegungs-Daten an die Steuervorrichtung zu übermitteln. Selbstverständlich kann die Führungsrolle auch weitere Positionen zwischen der ersten und zweiten Position einnehmen, welche bei Belegung weiterer Speicherebenen verwendet werden. Die Anzahl an Positionen, welche die Führungsrolle einnehmen kann, entspricht insbesondere der Anzahl an Speicherebenen. Diese Ausführungsvariante basiert auf der Erkenntnis, dass die Position einer der beiden Führungsrollen, bspw. der unteren Führungsrolle, abhängig von der Belegung der Speicherebenen ist. Insbesondere wird der Nutzer bei einem Wechsel der Speicherebenen auch die Führungsrolle verstellen, sodass deren Position mit der letzten genutzten Speicherebene (parallel Rolle) des Seilspeichers fluchtet. Eine Erkennung der Position der Führungsrolle stellt demnach eine kostengünstige und robuste Möglichkeit dar, die Anzahl der belegten Speicherebenen zu erkennen.

Nach einer weiteren Ausführungsform weist die erste Sensorvorrichtung einen Hall Sensor auf, welcher dazu ausgebildet, eine Bewegung der ersten Führungsrolle zwischen der ersten und zweiten Position zu erfassen.

Nach einer weiteren Ausführungsform ist die Steuervorrichtung dazu ausgebildet, die Soll-Spannung aus einer Lookup-Tabelle auf Grundlage einer Anzahl belegter Speicherebenen auszulesen. Alternativ kann die Steuervorrichtung einen Algorithmus anwenden, um die Soll-Spannung als Funktion der belegten Speicherebenen zu berechnen.

Nach einer weiteren Ausführungsform weist die Seilsäge eine manuelle Eingabeschnittstelle auf, welche es dem Benutzer ermöglicht die Spannung des Spannmechanismus auf eine Überschreib-Spannung einzustellen, und wobei die Steuervorrichtung dazu ausgebildet ist, die vom Benutzer gewünschte Überschreib-Spannung mit der Soll-Spannung zu vergleichen und ein Warnsignal auszugeben, wenn die Nutzer-Spannung die Soll-Spannung übersteigt.

Nach einem weiteren Aspekt betrifft die Erfindung ein Verfahren zum Steuern einer Seilsäge mit einem Seilspeicher und einem Spannmechanismus, wobei das Verfahren folgende Schritte aufweist:
- Empfangen von Belegungs-Daten, welche repräsentativ für eine Anzahl an mit einem Sägeseil belegten Speicherebenen des Seilspeichers ist;
- Bestimmen einer Soll-Spannung auf Grundlage der Belegungs-Daten;
- Steuern des Spannmechanismus zur Einstellung der Soll-Spannung am Sägeseil.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 schematische perspektivische Ansicht einer Seilsäge gemäß einer Ausführungsform der vorliegenden Erfindung;
Fig. 2 schematische perspektive Teilansicht einer Seilsäge gemäß einer Ausführungsform der vorliegenden Erfindung.

### Detaillierte Beschreibung

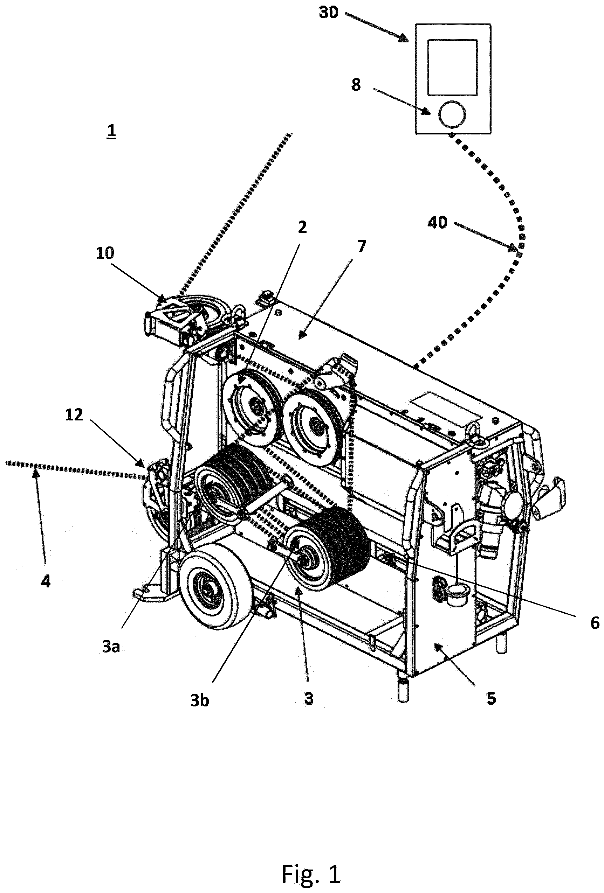

Figur 1 zeigt eine bevorzugte Ausgestaltung der vorgeschlagenen Seilsäge 1. Die Seilsäge 1 umfasst einen Seilantrieb 2 und einen Seilspeicher 3, wobei der Seilspeicher 3 zwei Rollensätze 3a, 3b umfasst. Jeder Rollensatz weist eine Vielzahl parallel zueinander angeordneter Rollen. Die parallelen Rollen sind auf einer gemeinsamen Achse angeordnet und bilden die oben bereits erwähnten Speicherebenen des Seilspeichers 3 aus. In der hier dargestellten Position sind am ersten Rollensatz 3a zwei Rollen und am zweiten Rollensatz 3b drei Rollen mit dem Sägeseil belegt. Mit anderen Worten, in der Position gemäß Figur 1 sind drei der insgesamt fünf dargestellten Speicherebnen des Seilspeichers 3 belegt.

Der Seilantrieb 2 und der Seilspeicher 3 liegen vorzugsweise an einer Antriebs- und Speichereinheit 5 der Seilsäge 1 angeordnet vor, wobei die Antriebs- und Speichereinheit 5 vorzugsweise den Hauptkörper der Seilsäge 1 bildet. Der Seilspeicher 3 ist dazu eingerichtet, das Sägeseil 4 der Seilsäge 1 aufzunehmen und zu speichern. Mit dem Seilantrieb 2 kann das Sägeseil 4 angetrieben werden.

Die Antriebs- und Speichereinheit 5 kann eine Abdeckung 7 aufweisen, die im Sinne der Erfindung bevorzugt auch als Seilspeicher-Abdeckung bezeichnet wird.

Die Seilsäge 1 weist einen hier nur angedeuteten Spannmechanismus 6 zur Straffung des Sägeseils 4 auf. Der Spannmechanismus 6 ist mit wenigstens einem der Rollensätze 3a, 3b verbunden und dient dazu die Rollensätze 3a, 3b relativ zueinander zu bewegen. Im hier dargestellten Beispiel handelt es sich bei dem Spannmechanismus 6 um einen pneumatischen Zylinder. Die Erfindung ist jedoch nicht auf die Art des Spannmechanismus beschränkt. Vielmehr kann dieser auch anderweitig ausgeführt sein, wie beispielsweise als elektrischer, hydraulischer oder auch manuell betätigter Linearantrieb. Der Spannmechanismus 6 ist einerseits mit der Abdeckung 7 und andererseits mit dem zweiten Rollensatz 3b verbunden. Der Spannmechanismus kann also dazu verwendet werden, den zweiten Rollensatz 3b gegenüber dem ersten Rollensatz 3a zu verschieben, um Seil aufzunehmen oder freizugeben.

Der Spannmechanismus 6 ist mit einem manuellen Betätigungsmittel 8 verbunden, welches dazu ausgelegt ist, den Spannmechanismus anzusteuern. Das Betätigungsmittel 8 kann beispielsweise Teil einer Fernbedienungsvorrichtung 30 der Seilsäge 1 sein. Es ist im Sinne der Erfindung bevorzugt, dass zwischen der Fernbedienungsvorrichtung 30 und der Seilsäge 1, insbesondere ihrer Antriebs- und Speichereinheit 5, eine Kommunikationsverbindung 40 besteht. Diese Kommunikationsverbindung 40 ist vorzugsweise drahtlos ausgebildet. Um beim Belegen des Seilspeichers 3 ein unbeabsichtigtes Einschalten der Seilsäge 1 zu vermeiden, ist es bevorzugt, dass ein Steuerprogramm der Seilsäge 1 erhöhte Sicherheitsstandards erfüllt. Dadurch kann insbesondere ein unerwünschtes selbständiges Anlaufen der Seilsäge 1 effektiv vermieden werden. Das Steuerprogramm der Seilsäge 1 kann beispielsweise als Computerprogramm-Produkt realisiert sein und auf der Antriebs- und Speichereinheit 5 der Seilsäge 1 betrieben werden.

Die Seilsäge 1 kann mit der Fernbedienungsvorrichtung 30 gesteuert werden, indem auf der Fernbedienung 30 Eingaben vorgenommen werden, die eine Wirkung auf die Seilsäge 1 haben. Die Fernbedienung 30 weist ein Betätigungsmittel 8 auf, mit der Spannmechanismus angesteuert werden kann. Andererseits kann die Fernbedienung beispielsweise auch dazu verwendet werden den Seilantrieb 2 zu steuern, bspw. um den Vorschub des Sägeseils zu kontrollieren bzw. die Seilsäge ein- oder auszuschalten.

Die Seilsäge 1 weist ferner Führungsrollen 10, 12 auf. Die Führungsrollen 10, 12 dienen dazu das Sägeseil in Richtung der Antriebsrollen 2 beziehungsweise der Rollensätze 3a, 3b in das Gehäuse der Seilsäge hineinzuführen beziehungsweise eine Ablenkung des Sägeteils in jegliche Richtung außerhalb des Gehäuses zu ermöglichen. Hierzu sind die Führungsrollen 10, 12 Rotierbar und verschwenkbar am Gehäuse der Seilsäge angebracht.

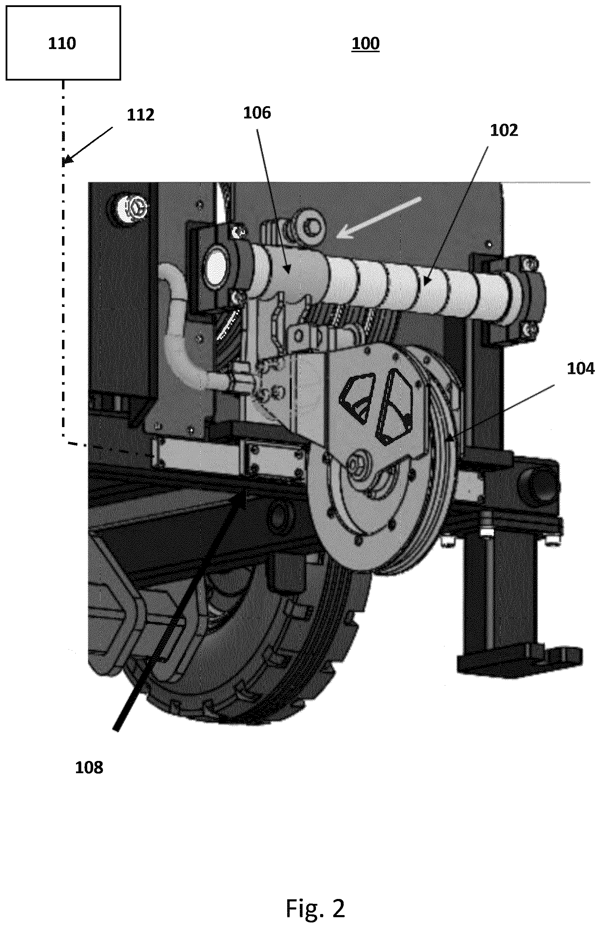

Die in der Figur 1 unten am Gehäuse der Seilsäge 1 angeordnete Führungsrolle 12 ist auf Höhe des Seilspeichers 3 am Gehäuse angeordnet. Um unnötige Lateralkräfte auf das Sägeseil zu verhindern ist die untere Führungsrolle 12 lateral beweglich gegenüber dem Gehäuse der Seilsäge angeordnet. Dies ist insbesondere in der Figur 2 dargestellt.

Die Figur 2 zeigt eine schematische, perspektivische Ansicht eines unteren Teilbereichs einer Seilsäge 100 gemäß einer Ausführungsform der vorliegenden Erfindung. Die Seilsäge 100 weist ein Führungsmittel auf, welches in der hier dargestellten Ausführungsvariante als Führungsstange 102 ausgebildet ist. Die untere Führungsrolle 104 der Seilsäge 100 ist mit einer Buchse 106 verbunden, welche in Längsrichtung entlang der Führungsstange 102 beweglich ist. Die Führungsrolle 104 kann dementsprechend zwischen einer in Figur 2 gezeigten ersten Position, am ersten Ende der Führungsstange 102, und einer zweiten Position, am gegenüber liegenden zweiten Ende der Führungsstange 102, verfahren werden. Die Führungsrolle 104 befindet sich insbesondere dann in der ersten Position, wenn lediglich eine der Rollen des zweiten Rollensatzes 3b mit einem Sägeseil belegt ist. Mit anderen Worten, die Führungsrolle 104 befindet sich in der ersten Position, wenn lediglich eine Ebene des Seilspeichers mit dem Sägeseil belegt ist. Die Führungsrolle 104 befindet sich dann in der zweiten Position, wenn alle Rollen beider Rollensätze 3a, 3b mit dem Sägeseil belegt sind. Mit anderen Worten, die Führungsrolle 104 befindet sich in der zweiten Position, wenn alle Ebenen des Seilspeichers (hier 5) mit dem Sägeseil belegt sind. Die Führungsrolle 104 kann selbstverständlich auch Zwischenstellungen zwischen der ersten und zweiten Position einnehmen, wenn mehr als die erste Speicherebene und gleichzeitig weniger als alle Speicherebenen belegt sind. Es folgt, dass die Position der Führungsrolle 104 ein Maß für die Belegung der Seilspeicher-Ebenen ist. In der hier dargestellten Ausführungsform existieren bspw. insgesamt fünf Positionen der Führungsrolle, d.h. drei weitere Positionen, die zwischen den Endstellungen gemäß der ersten und zweiten Position eingestellt werden können.

Die Seilsäge 100 weist eine erste Sensorvorrichtung 108 zum Erfassen der belegten Speicherebenen auf. In der hier dargestellten Ausführungsform handelt es sich bei der ersten Sensorvorrichtung 108 um einen Positionssensor. Die erste Sensorvorrichtung 108 ist gemäß diesem Beispiel dazu ausgebildet, die Position der Führungsrolle 104 zu erfassen. Insbesondere erfasst die Sensorvorrichtung 108 die Position der Führungsrolle 104 entlang der Führungsstange 102 zwischen der in Fig. 2 dargestellten ersten Position und der zweiten Position (nicht dargestellt), bei Belegung aller Speicherebenen.

Die Sensorvorrichtung 108 kann als berührungsloser Sensor ausgebildet sein. Beispielsweise handelt es sich um einen Hall-Sensor, welcher dazu ausgebildet ist, die Lage der Führungsrolle 104 in lateraler Richtung zwischen der ersten und zweiten Position zu ermitteln. Die Sensorvorrichtung kann derartige Positionsdaten zur Auswertung an eine Steuervorrichtung 110 der Seilsäge 100 senden. Die Steuervorrichtung 110 kann beispielsweise innerhalb des Gehäuses der Seilsäge angeordnet sein. Alternativ kann die Steuervorrichtung 110 Teil der in Figur 1 gezeigten Fernbedienungsvorrichtung 30 oder an jeder anderen dezentralen Lage angeordnet sein. Die erste Sensorvorrichtung 108 kann drahtgebunden oder drahtlos mit der Steuervorrichtung 110 verbunden sein, wie dies durch den in Figur 2 dargestellte Kommunikationskanal 112 angedeutet ist.

Bei der in Figur 2 gezeigten Ausführungsform handelt es sich bei den Positionsdaten um ein Beispiel für Belegungs-Daten, welche repräsentativ für eine Anzahl an mit einem Sägeseil belegten Speicherebenen des Seilspeichers sind. Die Steuervorrichtung 110 kann die als Positionsdaten ausgeführten Belegungs-Daten dazu verwenden, die Anzahl der belegten Speicherebenen zu bestimmen. Hierzu kann die Steuervorrichtung 110 insbesondere Zugriff auf eine Lookup-Tabelle oder einen Algorithmus haben, mit welchen die Steuervorrichtung die Belegung der Speicherebenen aus der Position der Führungsrolle, d.h. auf Grundlage der Positionsdaten, ermitteln kann.

Die Steuervorrichtung 110 ist auch über einen weiteren Kommunikationskanal (nicht dargestellt) mit dem Spannmechanismus der Seilsäge verbunden. Über diesen Kommunikationskanal kann die Steuervorrichtung 110 einerseits den Spannmechanismus steuern, das heißt die Spannung bzw. den Druck des Spannmechanismus einstellen, und andererseits Rückmeldung über die derzeitige Spannung beziehungsweise den derzeitigen Druck des Spannmechanismus empfangen. Der Spannmechanismus kann hierzu mit einem entsprechenden Sensor (z.B. Drucksensor) versehen sein.

In der hier dargestellten Ausführungsform bestimmt die Steuervorrichtung 110, auf Grundlage der als Positionsdaten ausgeführten Belegungs-Daten, eine Soll-Spannung. Hierzu kann die Steuervorrichtung Zugriff auf eine entsprechende Lookup-Tabelle oder einen Algorithmus haben, mit welcher die Steuervorrichtung auf Grundlage der zuvor bestimmten Belegung der Speicherebenen Soll-Spannungen nachsehen bzw. berechnen kann. Generell ist die Steuervorrichtung derart ausgebildet, dass diese die Soll-Spannung proportional zur Anzahl der belegten Speicherebenen einstellt. Eine höhere Anzahl an belegten Speicherebenen führt generell zu einer höheren Soll-Spannung.

Gemäß einer weiteren Ausführungsform weist die Seilsäge 1, 100 eine zweite Sensorvorrichtung auf, welche dazu ausgebildet ist, die Position des Spannmechanismus zu erfassen und als Hub-Daten an die Steuervorrichtung 110 zu übertragen. Die zweite Sensorvorrichtung kann ebenfalls einen Hall-Sensor oder jeden anderen, geeigneten Sensor aufweisen, welcher sich dazu eignet, die Position des Spannmechanismus zwischen seiner vollständig eingefahrenen und seiner vollständig ausgefahrenen Position zu erkennen.

Die Steuervorrichtung 110 ist dazu ausgebildet einen Resthub des Spannmechanismus auf Grundlage der Hub-Daten zu ermitteln. Beispielsweise kann der Gesamthub des Spannmechanismus (bspw. des Pneumatikzylinders) 1m betragen. Mit anderen Worten, die beiden Rollensätze 3a, 3b können maximal 1m voneinander beabstandet werden. Wenn sich der Spannmechanismus beispielsweise mittig zwischen seinen beiden Endlagen (voll ausgefahren und voll eingefahren) befindet, so besteht ein Abstand von 0,5m zwischen den Rollensätzen 3a, 3b. In diesem Fall ermittelt die Steuervorrichtung 110 anhand der Hub-Daten (bspw. Spannmechanismus ist 0,5m ausgefahren), dass der Resthub 0,5m beträgt (1m Gesamthub - 0,5m bestehender Hub). Die Steuervorrichtung 110 erfasst dementsprechend auch, welche Länge an Sägeseil auf der derzeitigen Speicherebene maximal noch aufgenommen werden können. Hierzu kann die Steuervorrichtung einen Algorithmus umfassen, welcher dazu dient die in der derzeitigen Speicherebene noch verfügbare Speicherkapazität für das Sägeseil auf Grundlage des Resthubs zu berechnen. Der Algorithmus kann je nach Ausbildung des Seilspeichers varrieren. In einem Beispiel ergibt sich die in der aktuellen Speicherebene verfügbare Speicherkapazität aus dem Resthub multipliziert mit der Anzahl der derzeit belegten Speicherebenen und einem Faktor 2.

Sollte die Steuervorrichtung, wie im oben genannten Beispiel, einen Resthub von 0,5m auf der 2ten Speicherebene feststellen, so errechnet sich die in der aktuellen (2ten) Speicherebene als 0.5m x 2 (für 2te Ebene) x 2 (konstanter Faktor). Das heißt, dass im o.g. Beispiel, in der zweiten Speicherebene, noch 2m Seil gespeichert werden können, da sich der Spannmechanismus mittig zwischen seinen Endlagen befindet. Sollte sich der Spannmechanismus allerdings in der dritten Speicherebene mittig zwischen den Endlagen befinden, so könnte die Steuervorrichtung, mit Hilfe des oben genannten Algorithmus eine noch verfügbare Speicherkapazität von 0,5m x 3 (für 3te Ebene) x 2 = 3m ermitteln.

Der oben erwähnte Gesamthub von 1m ist nur beispielhaft dargestellt. Der Gesamthub des Spannmechanismus kann in anderen Beispielen zwischen 0,5m und 1,5m betragen.

Die Steuervorrichtung 110 ist gemäß einer weiteren Ausführungsform dazu ausgebildet die gesamte Restkapazität der Seilsäge zu ermitteln. Hierzu kann die Steuervorrichtung 110, auf Grundlage der Belegungs-Daten, die derzeitige Speicherebene ermitteln. Die Steuervorrichtung hat Zugriff auf eine Datenbank, in welcher die maximal möglich Seilaufnahme pro Speicherebene hinterlegt ist. Somit kann die Steuervorrichtung 110 auf Grundlage der Belegungs-Daten ermitteln, welche Seillänge maximal in der derzeitigen Speicherebenen aufgenommen werden kann. Die Steuervorrichtung kann aus derselben Datenbank ermitteln, welche maximale Seillänge in der letzten Speicherebene durch den Seilspeicher aufgenommen werden kann. Die Steuervorrichtung kann die maximale Speicherkapazität der derzeitigen Speicherebene (z.B. 2. Ebene) von der maximalen Speicherkapazität der letzten Speicherebene (z.B. 5. Ebene) subtrahieren. Die Differenz entspricht der in den noch nicht belegten Speichern verfügbare Speicherkapazität. Beispielsweise kann die maximale Speicherkapazität in der 2. Ebene 8m betragen, während die maximale Speicherkapazität in der letzten (z.B. 5ten) Ebene 18m betragen kann. Die Differenz, und damit die in den noch freien Speicherebenen (3te, 4te und 5te Ebene) verfügbare Seilspeicherkapazität, beträgt in diesem Beispiel also 18m - 8m = 10m. Es sei an dieser Stelle erwähnt, dass die Seilspeicherkapazität pro Ebene im Wesentlichen vom Durchmesser der Speicherrollen und vom Gesamthub des Spannmechanismus abhängt.

Die Steuervorrichtung 110 ist dazu ausgebildet diese freie Kapazität der freien Speicherebenen (hier 10m) zu dem oben ermittelten Resthub der aktuellen Speicherebene (hier 2m) hinzu zu addieren, um die Restkapazität der Seilsäge zu bestimmen. Im hier dargestellten Beispiel ermittelt die Steuervorrichtung 110 also eine gesamte Restkapazität der Seilsäge von 12m (10m freier Speicher + 2m Resthub im derzeitigen Speicher).

Die Speichervorrichtung 110 kann dazu ausgebildet sein, die Restkapazität regelmäßig oder kontinuierlich an den Benutzer auszugeben. Hierzu kann die Speichervorrichtung 110 beispielsweise mit der Fembedienungsvorrichtung 30 in Kommunikationsverbindung stehen. Die Fernbedienungsvorrichtung 30 kann eine Anzeigevorrichtung (bspw. einen Touchscreen) aufweisen, über welche die Restkapazität an den Benutzer ausgegeben werden kann. Auf Grundlage der Restkapazität kann der Benutzer einschätzen, ob der Sägevorgang in der derzeitigen Konfiguration beendet werden kann, oder ob ggf. ein Versetzen der Seilsäge bzw. ein kürzeres Sägeseil notwendig ist.

### Bezugszeichenliste

- 1: Seilsäge
- 2: Seilantrieb
- 3: Seilspeicher
- 3a, 3b: Rollensätze
- 4: Sägeseil
- 5: Antriebs- und Speichereinheit der Seilsäge
- 6: Spannmechanismus
- 7: Abdeckung für den Seilspeicher
- 8: Betätigungsmittel
- 10, 12: Führungsrolle
- 30: Fernbedienungsvorrichtung
- 40: Kommunikationsverbindung
- 100: Seilsäge
- 102: Führungsstange
- 104: Führungsrolle
- 106: Buchse
- 108: erste Sensorvorrichtung
- 110: Steuervorrichtung
- 112: Kommunikationskanal

## Patentansprüche

1. Seilsäge (1) welche folgendes aufweist:
- einen Seilantrieb (2) zum Antrieb eines Sägeseils (4);
- einen Seilspeicher (3) mit mindestens zwei Speicherebenen;
- einen Spannmechanismus (6) zum Spannen eines Sägeseils (4);
- eine Steuervorrichtung (110), welche ausgebildet ist zum:
- Empfangen von Belegungs-Daten, welche repräsentativ für eine Anzahl an mit einem Sägeseil (4) belegten Speicherebenen des Seilspeichers (3) ist;
- Bestimmen einer Soll-Spannung auf Grundlage der Belegungs-Daten;
- Steuern des Spannmechanismus (6) zur Einstellung der Soll-Spannung.

2. Seilsäge (1) nach Anspruch 1,
wobei der Spannmechanismus (6), insbesondere stufenlos, zwischen einer ersten, eingefahrenen Stellung und einer zweiten, ausgefahrenen Stellung beweglich ist, und wobei die Seilsäge eine zweite Sensorvorrichtung aufweist, welche dazu ausgebildet ist, die Position des Spannmechanismus (6) zu erfassen und als Hub-Daten an die Steuervorrichtung (110) zu übertragen.

3. Seilsäge (1) nach Anspruch 2,
wobei die Steuervorrichtung (110) dazu ausgebildet ist, die Hub-Daten zu empfangen und, auf Grundlage der Hub-Daten, einen Resthub des Spannmechanismus (6) zu ermitteln.

4. Seilsäge (1) nach Anspruch 3,
wobei der Resthub einem Abstand des Spannmechanismus (6) von der zweiten, ausgefahrenen Stellung entspricht.

5. Seilsäge (1) nach einem der Ansprüche 1 bis 4,
wobei die Steuervorrichtung (110) dazu ausgebildet ist eine Rest-Speicherkapazität des Seilspeichers (3) auf Grundlage der Belegungs-Daten und/oder der Hub-Daten zu ermitteln.

6. Seilsäge (1) nach Anspruch 5,
wobei die Steuervorrichtung (110) zur Ermittlung der Rest-Speicherkapazität folgende Schritte vornimmt:
- Bilden eines Produkts aus nicht belegten Speicherebenen und einem Gesamthub des Spannmechanismus (6);
- Addieren des Produkts mit dem Resthub des Spannmechanismus (6).

7. Seilsäge (1) nach Anspruch 6,
wobei die Steuervorrichtung (110) dazu ausgebildet ist ein Rest-Speicherkapazitäts-Signal für den Benutzer der Seilsäge auszugeben.

8. Seilsäge (1) nach einem der Ansprüche 1 bis 7,
wobei die Seilsäge mindestens eine Führungsrolle aufweist, welche dazu ausgebildet ist das Sägeseil (4) in ein Gehäuse der Seilsäge hinein und/oder aus einem Gehäuse heraus zu führen, wobei die Führungsrolle derart beweglich am Gehäuse der Seilsäge angeordnet ist, dass die Führungsrolle zwischen einer ersten Position, bei Belegung einer Speicherebene des Seilspeichers (3) und einer zweiten Position, bei Belegung aller Speicherebenen des Seilspeichers (3), überführbar ist, wobei die erste Sensorvorrichtung (108) dazu ausgebildet ist, die Position der Führungsrolle zu erfassen und als Belegungs-Daten an die Steuervorrichtung (110) zu übermitteln.

9. Seilsäge (1) nach Anspruch 8,
wobei die Seilsäge eine erste Sensorvorrichtung (108), insbesondere einen Hall Sensor aufweist, welche dazu ausgebildet ist, eine Bewegung der ersten Führungsrolle zwischen der ersten und zweiten Position zu erfassen.

10. Seilsäge (1) nach einem der Ansprüche 1 bis 9,
wobei die Steuervorrichtung (110) dazu ausgebildet ist, die Soll-Spannung aus einer Lookup-Tabelle auf Grundlage einer Anzahl belegter Speicherebenen auszulesen.

11. Seilsäge (1) nach einem der Ansprüche 1 bis 10,
wobei die Seilsäge eine manuelle Eingabeschnittstelle aufweist, welche es dem Benutzer ermöglicht die Spannung des Spannmechanismus (6) auf eine Überschreib-Spannung einzustellen, und wobei die Steuervorrichtung (110) dazu ausgebildet ist, die vom Benutzer gewünschte Überschreib-Spannung mit der Soll-Spannung zu vergleichen und ein Warnsignal auszugeben, wenn die Nutzer-Spannung die Soll-Spannung übersteigt.

12. Verfahren zum Steuern einer Seilsäge mit einem Seilspeicher (3) und einem Spannmechanismus (6), wobei das Verfahren folgende Schritte aufweist:
- Empfangen von Belegungs-Daten, welche repräsentativ für eine Anzahl an mit einem Sägeseil (4) belegten Speicherebenen des Seilspeichers (3) ist;
- Bestimmen einer Soll-Spannung auf Grundlage der Belegungs-Daten;
- Steuern des Spannmechanismus (6) zur Einstellung der Soll-Spannung am Sägeseil (4).

13. Seilsäge (1) welche folgendes aufweist:
- einen Seilantrieb (2) zum Antrieb eines Sägeseils (4);
- einen Spannmechanismus (6) zum Spannen eines Sägeseils (4), wobei der Spannmechanismus (6), insbesondere stufenlos, zwischen einer ersten, eingefahrenen Stellung und einer zweiten, ausgefahrenen Stellung beweglich ist, und wobei die Seilsäge eine Sensorvorrichtung aufweist, welche dazu ausgebildet ist, die Position des Spannmechanismus (6) als Hub-Daten zu erfassen.
- eine Steuervorrichtung (110), welche ausgebildet ist zum:
- Empfangen der Hub-Daten;
- Ermitteln eines Resthubs des Spannmechanismus (6) auf Grundlage der Hub-Daten, wobei der Resthub einem Abstand des Spannmechanismus (6) von der zweiten, ausgefahrenen Stellung entspricht
- Ausgabe des Resthubs.

14. Seilsäge (1) nach Anspruch 13,
wobei die Seilsäge (1) einen Seilspeicher (3) mit mindestens zwei Speicherebenen aufsowie eine Sensorvorrichtung, welche dazu ausgebildet ist, die Belegung des Seilspeichers (3) als Belegungs-Daten zu erfassen, und wobei die Steuervorrichtung dazu ausgebildet ist, eine Rest-Speicherkapazität des Seilspeichers (3) auf Grundlage der Belegungs-Daten und/oder der Hub-Daten zu ermitteln.
